# EUROPEAN PATENT APPLICATION

(11) **EP 0 800 094 A1**
(43) Date of publication of application: **08.10.1997**
(21) Application number: 97301902.9
(22) Date of filing: 20.03.1997
(51) Int. Cl.: G01S 13/02, E05B 49/00

(54) **Circuit for detecting a transponder**

(30) Priority: 02.04.1996 US 626522
(71) Applicant: Ford Motor Company, Dearborn, MI 48126 (US)
(72) Inventor: Campbell, Scott O., Canton, Michigan 48188 (US); Kennedy, John F., Dearborn, Michigan 48124 (US)
(74) Representative: Messulam, Alec Moses

(57) **Abstract**

A circuit for remotely detecting a transponder includes a tank circuit (40) having a predetermined quality factor. The tank includes a transformer having a tap (48). A quality factor lowering means (42) is connected to the tank circuit (40) for broadening the bandwidth of the tank circuit (40) to include the transmit and receive frequencies. A control module (50) generates transmit signals and receives receive signals. A wire pair means (52) connected between said control module (50) and the coil circuit (40) provides an inductance cancelling and substantially noise immune connection between the coil circuit and the control module. One (54) of the wires is connected to the tap (48). The other of the wires (52) is connected to ground at the control module (50) for providing a ground to said transformer.

## Description

The present invention relates generally to transponder detection system, and more specifically to a circuit for remotely detecting transponders in an automobile.

Reference is made to commonly assigned U.S. application Nos. 626,585 and 626,586.

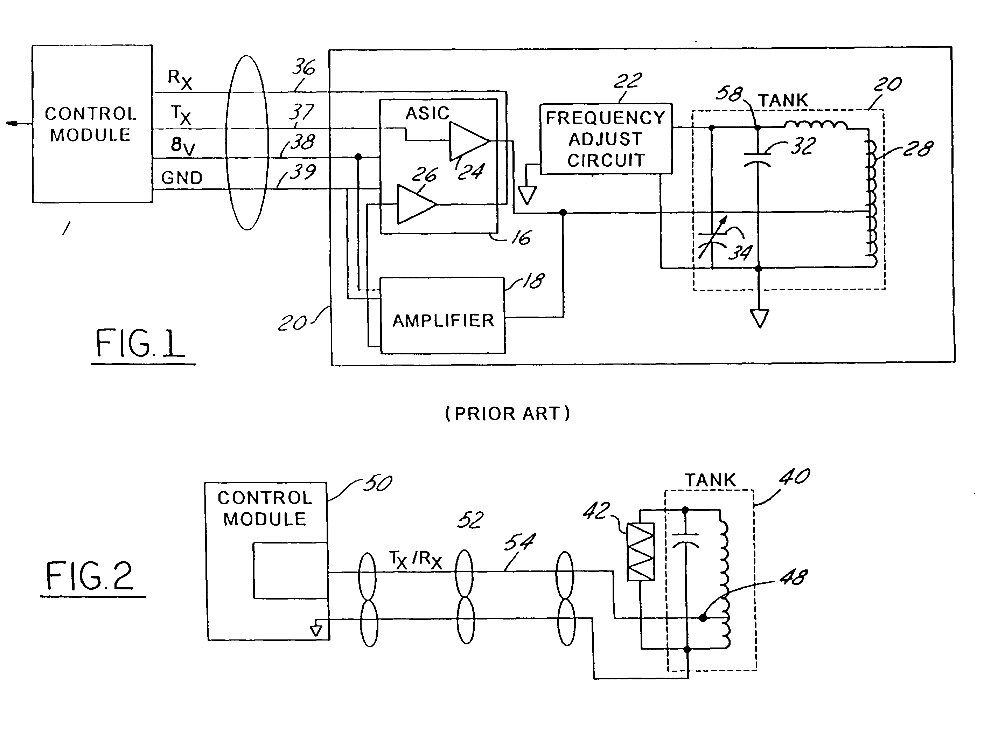

A prior art transponder detection apparatus is shown in FIG. 1. A transponder is a self-contained identification device that when brought into a sufficiently strong magnetic field becomes energised and emits a code or other information. The transponder detection apparatus comprises a control module 10 and a transceiver circuit 12. Control module 10 controls the transmission and reception functions from transceiver circuit 12 through a communications link 14. Communications link 14 has a receive signal line 36, a transmit signal line 37, a power line 38, and a ground line 39.

Transceiver circuit 12 has an Application Specific Integrated Circuit (ASIC) 16, an amplifier 18, a tank circuit 20 and a frequency adjustment circuit 22.

ASIC 16 is the link between control module 10 and transceiver circuit 12. ASIC 16 has a coil drive circuit 24 and a comparator 26. Tank circuit 20 has an autotransformer 28 with a tap 30, a capacitor 32 in parallel with autotransformer 28, and a variable capacitor 34, also in parallel with autotransformer 28. Autotransformer 28 is used as the radiating and receiving antenna. Coil drive circuit 24 drives autotransformer 28 as a transmitter through tap 30. Variable capacitor 34 is used to adjust the resonant frequency of the tank during manufacture.

Amplifier 18 amplifies the low level voltage signal received from the transponder. The signal from the transponder is typically on the order of ten millivolts.

Frequency adjustment circuit 22 preferably comprises a resistor and a capacitor that are switched in parallel with the tank circuit 20 to adjust the resonant frequency of tank circuit between the transmit and receive frequencies emitted by the transponder.

The transponder detection circuit operates by control module 10 sending a transmit signal through communication link 14 to ASIC 16. Coil drive circuit 24 receives the transmit signal from control module 10. Coil drive circuit 24 is connected to tap 30 and is used to drive autotransformer 28 at a particular frequency. After transmitting a signal, the control module waits for a response from a transponder (not shown) located in close proximity to the tank circuit. If the transponder is located near tank circuit 20, it will transmit a low-level voltage signal that will be received by the tank circuit 20 and amplified in amplifier 18. The amplified signal is then passed through comparator 26 and receive signal line 36 before reaching control module 10 for processing.

One problem associated with the configuration of the prior art is that the ASIC 16, amplifier 18, frequency adjust circuit 22, capacitor 32 and variable capacitor 34 must be located in close proximity to the autotransformer 28. For example, in the circuit shown, the components can only be located a few inches from transceiver circuit. This is due to several factors that include the inability of the ASIC to handle the increase in power required to compensate for the power lost due to the increased impedance of a long connection between the ASIC 16 and tap 30 of autotransformer 28. Another problem is that a long connection has the problem of both emitting and receiving electromagnetic interference that may cause interference in other components or the reception of weak signals, thereby corrupting these signals. A long connection also causes the tank circuit to become very sensitive to wire routing, wire length and wire gauge.

Another drawback with the circuit is that variable capacitor 34 must be adjusted to a particular transmit or receive frequency since different frequencies are used for transmission and reception in an FSK system. Frequency adjust circuit 22 switches the resonant frequency of the tank when the opposite frequency from that which the tank is required. The adjustment of variable capacitor 34 is a time-consuming, labour-intensive operation, which is desirable to eliminate in a mass-produced product.

According to the present invention, there is provided a circuit for detecting a transponder having transmit and receive frequencies comprising: a tank circuit having a predetermined quality factor, said tank circuit including a transformer having a tap; a quality factor lowering means connected to said tank circuit for broadening the bandwidth of said tank circuit to include said transmit and receive frequencies; control module generating transmit signals and receiving receive signals; and wire pair means connected between said control module and said tank circuit for providing an inductance minimisation noise immune connection between said tank circuit and said control module, one of said wires connected to said tap for transmitting transmit signals from said control module to said tap and receiving said signals from said tap to said control module, the other of said wires connected to ground at said control module for providing a ground to said tank circuit.

Further, according to the present invention, there is provided a circuit for detecting a plurality of transponders having transmit and receive frequencies comprising: a plurality of tank circuits having a bandwidth to include said transmit and receive frequencies; a quality factor lowering means connected to each of said remote sensing coil assemblies for increasing said bandwidth to include said transmit and receive frequencies; a multiplexer; a plurality of wire pairs connecting said multiplexer to said remote sensing coil assembly having a first wire and second wire, said first wire communicating receive and transmit signals, each remote sensing coil assembly having a respective twisted wire pair; and a control module connected to said multiplexer, said control module remotely located from said remote sensing coil assembly, said control module energising said remote sensing coil assembly, receiving a response signal from the transponder and controlling a predetermined function based on said response signal.

A circuit embodying the invention has an advantage that the control module containing selected transceiver circuits can be located away from the tank circuit. Another advantage is that only two wires are used for communication link between the control module and the tank circuit. Yet another advantage is the elimination of the frequency adjust circuit and the variable capacitor. Further it does not need resonant frequency adjustment of the tank circuitry during operation nor during assembly. Several new functions using a common control module can be used that would otherwise have been cost-prohibitive. Several tank circuits can be located in various locations of the automobile and through a multiplexer use a common control module.

The invention will now be described, by way of example, with reference to the accompanying drawings, in which:
Fig. 1 is a prior art transponder apparatus;
Fig. 2 is a transponder detection apparatus according to the present invention; and,
Fig. 3 is a detailed block diagram of the control module of the transponder apparatus according to the present invention.

Referring now to Fig. 2, transponder detection apparatus has a tank circuit 40 that is connected in parallel to a dummy load 42. A control module 50 is connected to tank circuit 40 by a wire pair 52.

Tank circuit 40 is comprised of an autotransformer 44 and a capacitor 46. Autotransformer 44 has a tap 48 and a number of turns. Tap 48 is located a predetermined number of turns from the ground connection to autotransformer 44. As an example the total number of turns may be 200 and the tap is located 20 from where ground is connected to the coil.

Wire pair 52 has a transmit/receive wire 54 and a ground wire 56. Transmit/receive wire 54 is connected to tap 48 of tank circuit 40. Ground wire 56 is connected to one end of transformer 44. Wire pair 52 minimises any inductances between the wires. One method for minimising inductances is to twist the wires. The wire pair may also be a single transmit/receive wire and shielding used for the ground wire. Inductance minimising is important since the resonant frequency of tank may be shifted by large inductances of the connecting wire. Also, the twisted pair of wires provides a substantially noise-immune connection that is preferable since the length of wire pair 52 may exceed 15 feet in an automotive application. Control module 50 is capable of transmitting and receiving signals on a single wire. Ground wire 56 is grounded at control module 50 to provide a common ground to tank circuit 40 and is also common to transmit/receive signals generated from/to control module 50.

Transmit/receive wire 54 is connected to tap 48 to minimise the effect of impedance changes due to wire routing and gauge on the tank resonance. If the transmit/receive wire is connected to top 58, the resonant frequency of the tank will be significantly changed due to variances in the length, gauge and routing of the wires. This would be unacceptable since several different lengths of wire may be used in a vehicle depending on particular applications in the vehicle.

The configuration of autotransformer 40 has a particular resonance frequency associated with it. A quality factor is also associated with autotransformer 40. Dummy load 42 is placed in parallel with the tank circuit to reduce the quality factor of tank circuit 40. Reducing the quality factor of the tank circuit 40 increases the bandwidth. The dummy load acts as a power absorber to widen the bandwidth to include the transmit and receive frequencies without the need for a frequency adjusting circuit to switch the frequency during operation or a variable capacitor to initially adjust the circuit during manufacturing. The system may transmit in one frequency and receive in another or two or more frequencies may be used as in a frequency-shift keyed type apparatus.

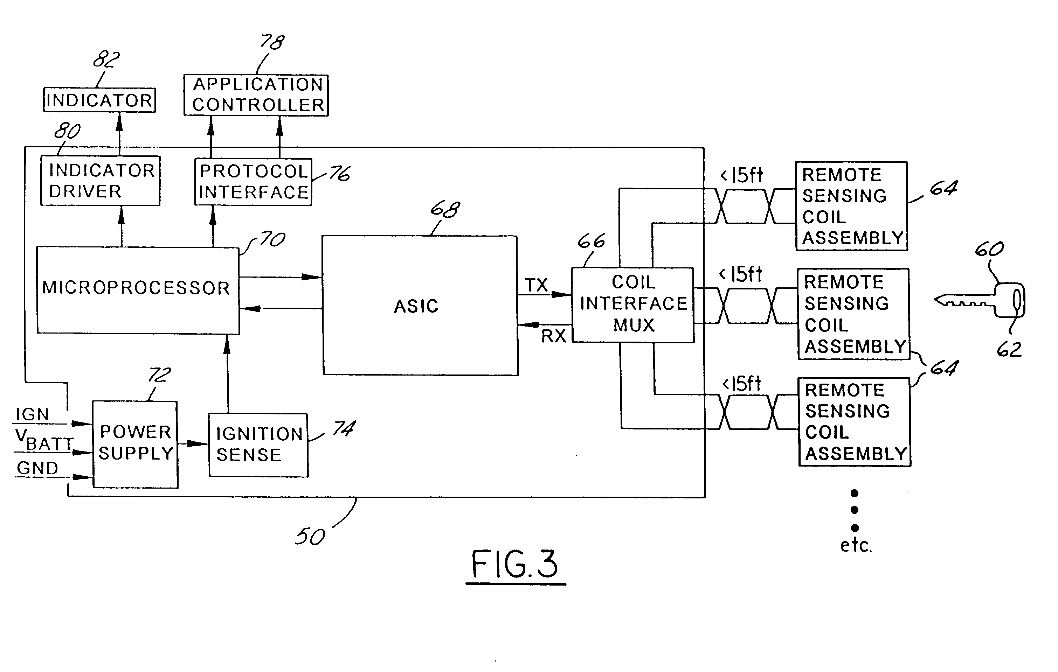

Referring now to Fig. 3, a key 60 is shown having a transponder 62 in relation to a remote sensing coil 64. Remote sensing coil 64 is a combination of autotransformer 44, capacitor 46, and dummy load 42 from Fig. 2. Control module 50 has been expanded so that common circuitry can be used to monitor several remote sensing coil assemblies. A coil interface 66 is used to multiplex the coil assemblies into control module 50. An ASIC 68 has a coil driver, an amplifier, and an FM demodulator to transmit and receive signals to and from coil interface 66. Other types of demodulating circuitry may be used, however, FM is preferred.

A microprocessor 70 is used to control the operation of control module 50. Microprocessor 70 sends coded signals and processes received signals from remote coil sensing assemblies. In the case of an anti-theft system, a power supply 72 is used for inputting ignition voltage, battery voltage and ground into an ignition sense 74. When ignition sense 74 senses an ignition voltage microprocessor 70 is activated, i.e., when the key is rotated in the ignition lock. Microprocessor 70 is also connected to a protocol interface 76 used for interfacing to an application controller 78. If, for example, control module 50 is used to control an anti-theft system, application controller 78 may be an engine control module. Microprocessor 70 transmits an interrogating signal through ASIC 68 and coil interface 66. If a proper transponder is present, microprocessor 70 through protocol interface 76 would enable a function controlled by application controller 78, such as enabling the starting of an engine through an engine control module. If a proper code was not received from the transponder in the key, microprocessor disables the engine controller. Microprocessor 70 may also be connected to an indicator driver 80 to drive an indicator 82. If a fault occurs or some other signalling is desired, an indicator driver can be turned on to energise an indicator to alert the vehicle operator of the specific situation.

## Claims

1. A circuit for detecting a transponder having transmit and receive frequencies comprising:
a tank circuit (40) having a predetermined quality factor, said tank circuit (40) including a transformer (44) having a tap (48);
a quality factor lowering means (42) connected to said tank circuit (40) for broadening the bandwidth of said tank circuit to include said transmit and receive frequencies;
control module (50) generating transmit signals and receiving receive signals; and
wire pair means (52) connected between said control module (50) and said tank circuit (40) for providing an inductance minimisation noise immune connection between said tank circuit and said control module, one (54) of said wires connected to said tap (48) for transmitting transmit signals from said control module (50) to said tap (48) and receiving said signals from said tap to said control module, the other (56) of said wires (52) connected to ground at said control module (50) for providing a ground to said tank circuit (40).

2. A circuit as claimed in claim 1, wherein said quality factor lowering means changes an inductance to capacitance ratio.

3. A circuit as claimed in claim 1 or 2, wherein said wire pair means is a single wire and a conductive shield, and wherein said shield has a ground potential of said control module, and said single wire both transmits and receives signals.

4. A circuit for detecting a plurality of transponders having transmit and receive frequencies comprising:
a plurality of tank circuits having a bandwidth to include said transmit and receive frequencies;
a quality factor lowering means connected to each of said remote sensing coil assemblies for increasing said bandwidth to include said transmit and receive frequencies;
a multiplexer;
a plurality of wire pairs connecting said multiplexer to said remote sensing coil assembly having a first wire and second wire, said first wire communicating receive and transmit signals, each remote sensing coil assembly having a respective twisted wire pair; and
a control module connected to said multiplexer, said control module remotely located from said remote sensing coil assembly, said control module energising said remote sensing coil assembly, receiving a response signal from the transponder and controlling a predetermined function based on said response signal;

5. A circuit as claimed in claim 1 or 4, wherein said quality factor lowering means includes a dummy load.

6. A circuit as claimed in claim 1 or 4, wherein said wire pair means is a twisted pair, one of said pair for both transmitting and receiving, the other of said pair having ground potential of said control module.

7. A circuit as claimed in claim 4, wherein said wire pair is twisted.

8. A circuit as claimed in claim 4, further comprising an application controller connected to said control module, said application controller controlling said predetermined function.

9. A circuit as claimed in claim 4, further comprising indicating means for indicating said function.

10. A circuit as claimed in claim 4, further comprising a power supply, and an ignition sensor, and wherein said ignition sensor controls the connection of said power supply to said control module when a key turns an ignition lock.
